# FASCICULE DE BREVET EUROPEEN

(11) **EP 2 824 585 B1**
(45) Date de publication et mention de la délivrance du brevet: **30.09.2015**
(21) Numéro de dépôt: 14176811.9
(22) Date de dépôt: 11.07.2014
(51) Int. Cl.: G06F 13/42

(54) **Système de pilotage d'un équipement de réseau de type châssis modulaire à lames interconnectées, notamment de type ATCA**
Steuersystem einer Netzwerkausrüstung vom Typ modulare Grundplatte mit verbundenen Lamellen, insbesondere vom Typ ATCA
System for driving a network equipment type modular chassis with interconnected blades, in particular of the ATCA type

(30) Priorité: 12.07.2013 FR 1356854
(43) Date de publication de la demande: 14.01.2015
(73) Titulaire: Online SAS, 75008 Paris (FR)
(72) Inventeur: de Turckheim, Grégoire, 75017 PARIS (FR)
(74) Mandataire: Dupuis-Latour, Dominique

(56) Documents cités:
- CN-Y- 201 146 532
- US-A1- 2004 139 262
- US-A1- 2010 074 265
- US-B1- 7 408 951
- Yehan Liu: "Overview of ATCA Shelf, Shelf Overview of ATCA Shelf, Shelf Manager, Blades and IPMC Manager, Blades and IPMC Orgnization Orgnization", , 1 octobre 2007 (2007-10-01), XP055119444, Extrait de l'Internet: URL:http://www.hep.uiuc.edu/home/g-gollin/ research/_2007_08_03_liu.pdf [extrait le 2014-05-22]

## Description

L'invention concerne les équipements de réseau modulaires, en particulier les équipements tels que ceux utilisés dans les installations à grande échelle telles que grappes de serveurs, réseaux de télécommunications, routeurs... mises en oeuvre par les hébergeurs web, les fournisseurs d'accès Internet, les centres de stockage et de traitement de données de type *datacenter*, etc.

Ces équipements modulaires se présentent sous la forme de châssis installés dans des baies, chaque châssis comportant une pluralité de modules ou "lames" amovibles et une carte de fond de panier ou *backplane* recevant ces lames dans autant d'emplacements ou *slots*.

Chaque lame comporte sur une même carte de circuit un ou plusieurs serveurs (notamment avec les architectures de type "microserveur" regroupant un nombre important de serveurs sur une même lame), le tout sur une faible épaisseur physique, ce qui permet de juxtaposer une pluralité de lames identiques côte-à-côte dans un même châssis, typiquement 14 ou 16 lames par châssis. Les lames peuvent être retirées et échangées indépendamment les unes des autres, et il est en outre possible d'héberger dans un même châssis des lames offrant des fonctionnalités différentes.

L'invention vise plus particulièrement les châssis de type ATCA (*Advanced Telecommunications Computing Architecture*), qui est une spécification du *PCI Industrial Computer Manufacturers Group* définissant un standard matériel de châssis et de lames ainsi que la manière d'interfacer ces éléments, notamment pour permettre aux lames de communiquer entre elles via des liaisons série haute vitesse dans une architecture commutée, dont la topologie est définie par la carte de fond de panier.

L'invention concerne spécifiquement la fonction de contrôle et de gestion de bas niveau des éléments du châssis dite *shelf management* (ci-après "gestion du châssis"), concernant notamment le pilotage de l'alimentation électrique et de la ventilation ainsi que la gestion de l'activité d'ensemble du châssis, notamment la surveillance des lames et la transmission des alertes en cas de défaillance, ainsi que l'exécution d'opérations spécifiques au sein du châssis lors des opérations d'insertion et d'extraction des lames.

Les spécifications ATCA prévoient un bus dédié à ces fonctions de gestion du châssis. Ce bus, dénommé IPMB (*Intelligent Platform Management Bus*) est un bus série recevant des informations relatives à des données d'état ou à des paramètres électriques ou physiques mesurés ou détectés sur chacune des lames (ci-après "informations de lame") ou sur le châssis (ci-après "informations de châssis"). Le bus IPMB a également pour rôle de délivrer des instructions (ci-après "commandes de gestion") à une ou plusieurs des lames et/ou à des blocs d'alimentation électrique et de ventilation.

Les informations de lame et de châssis sont par exemple :
- des informations de température issues de capteurs placés sur les lames ou en divers points critiques du châssis ;
- des mesures de consommation de courant électrique ;
- des alarmes de "point chaud" lorsque la température d'une lame atteint un maximum admissible ;
- une alarme de défaillance de l'alimentation secteur avec basculement sur un onduleur alimenté par batterie;
- ou encore des informations d'état, telles qu'insertion d'une nouvelle lame, perte du réseau par une lame, etc.

Les commandes de gestion peuvent :
- concerner individuellement les lames, par exemple des commandes de redémarrage de tel ou tel serveur, d'extinction programmée d'une lame, etc. ;
- ou bien être communes aux différents éléments du châssis, par exemple le pilotage de la ventilation, la commande d'afficheurs ou encore l'envoi d'une alerte à une supervision générale en cas de survenue d'évènements qui ne peuvent pas être gérés automatiquement en interne par le châssis.

La gestion du châssis consiste à générer des commandes de gestion appropriées en fonction des informations de lame et de châssis recueillies en entrée, par exemple :
- en cas de défaut d'alimentation entrainant un passage sur batterie : estimation de l'autonomie en fonction du courant consommé par les différentes lames, puis activation d'un processus de sauvegarde et d'extinction des lames, et alerte des équipes de supervision ;
- en cas de point chaud observé sur une lame : pilotage de la ventilation de manière à maintenir le point chaud global au-dessous d'une température de consigne prédéfinie ;
- en cas d'augmentation significative du courant consommé : adaptation préventive de la ventilation ;
- en cas de perte du réseau par une lame : tentative de redémarrage de la lame, et envoi d'une alerte à la supervision ;
- en cas d'insertion/extraction d'une lame : amorçage/arrêt programmé de cette lame.

Les spécifications ATCA décrivent deux configurations possibles de lames au sein du châssis.

Une *première configuration* consiste à prévoir des lames spécifiques dites "lames réseau", qui sont des lames dédiées à des fonctions internes au châssis, consistant notamment à assurer la mise en réseau des autres lames du même châssis ainsi que le *monitoring* ou supervision de ce réseau (détection des anomalies de transmission, mesure de la charge de trafic, etc.). Les autres lames du châssis, dites "lames productives", offrent la fonctionnalité externe attendue, par exemple le recueil du trafic de télécommunication, l'hébergement de serveurs, etc.

Cette manière de procéder présente toutefois l'inconvénient de nécessiter pour chaque châssis deux lames dédiées, donc de devoir gérer deux types de lames différentes (lame réseau/lame productive) et de ne laisser à disposition que N-2 lames productives dans un châssis comportant N emplacements : typiquement, 12 lames productives pour un châssis de 14 slots, ou 14 lames productives pour un châssis de 16 slots.

Un autre inconvénient tient au fait que les lames réseau et les lames productives mettent en oeuvre des protocoles de communication respectifs différents, de sorte qu'il est nécessaire de prévoir un système complexe de détrompage logiciel ou *keying* pour s'assurer par exemple lors d'un échange de lame que le protocole utilisé sur un *slot* donné est bien celui qui correspond à la nouvelle lame insérée, réseau ou bien productrice.

La *seconde configuration*, la plus courante, consiste à prévoir une carte de circuit supplémentaire, dite *shelf manager,* montée sur la carte de fond du panier et reliée au bus IPMB. Cette carte recueille sur le bus les diverses informations de lame et de châssis, les analyse et génère les commandes de gestion requises, qui sont diffusées en retour sur ce même bus. Cette carte *shelf manager* est doublée par impératif de redondance, la gestion du châssis devant pouvoir continuer même en cas de défaillance de l'une des cartes.

Il devient ainsi possible de n'avoir que des lames productives, sans recourir à des lames réseau, donc de n'avoir qu'un seul type de matériel à gérer et avec une occupation optimale des *slots* de chaque châssis.

De plus, la procédure de *keying* devient inutile, toutes les lames étant identiques.

En revanche, l'inconvénient majeur de cette seconde configuration tient au fait que, en raison de l'absence de lame réseau (comme dans la première configuration), chacune des N lames, toutes productives, du châssis doit être connectée (mise en réseau) avec chacune des N-1 autres lames de ce même châssis. Ceci conduit à une topologie maillée (*mesh*) de type "N vers N", qui non seulement est complexe à gérer (à la différence d'une topologie en étoile "1 vers N" dans le cas où une lame réseau est prévue) mais également occupe un nombre élevé de ports réseau sur chaque lame, avec jusqu'à 15 ports réseau dédiés à l'interconnexion avec les autres lames du châssis.

En tout état de cause, la présence d'une carte *shelf manager* complexe qu'il est nécessaire de prévoir (et de dédoubler) pour chaque châssis induit un coût non négligeable dans les installations à grande échelle telles que grappes de serveurs, réseaux de télécommunications, etc.

Ces différentes questions sont abordées dans un article de Yehan Liu intitulé "Overview of ATCA Shelf, Shelf Overview of ATCA Shelf, Shelf Manager, Blades and IPMC Manager, Blades and IPMC Organization", XP55119444, daté du 1er octobre 2007 et publié sur le site Internet du *High Energy Physics Group* de *l'University of Illinois at Urbana-Champaign.*

L'un des buts de l'invention est de proposer une nouvelle technique de gestion de châssis qui remédie aux inconvénients exposés ci-dessus et qui notamment :
- ne requière pas de carte *shelf manager* complexe ;
- soit applicable à des châssis n'utilisant que des lames productives, sans recours à des lames réseau, donc avec un seul type de matériel à gérer, sans *keying* et avec une occupation optimale des *slots* de chaque châssis ;
- soit compatible avec les spécifications matérielles ATCA, en s'appuyant notamment sur les mêmes lignes électriques qu'un bus de type IPMB sans modification physique de la carte de fond de panier ; et
- maintienne une redondance permettant de garantir la continuité de la gestion du châssis même en cas de défaillance d'une lame (panne d'une lame) ou d'absence d'une lame (par exemple au moment d'une opération d'échange).

L'idée de base de l'invention consiste à remplacer la configuration hiérarchisée de la gestion de châssis conventionnelle par une configuration de type point-à-point (*peer-to-peer*), et à délocaliser dans l'ensemble des lames productives les fonctionnalités de gestion de châssis.

En effet, la configuration conventionnelle repose sur une architecture de type "maitre-esclave" dans laquelle les informations de lame et de châssis sont centralisées dans un module de gestion de châssis implémenté soit dans une lame réseau soit dans une carte *shelf manager* dédiée (le "maitre"), qui diffusent ensuite les commandes de gestion vers les lames productives ou vers une carte de pilotage général des fonctions de bas niveau du châssis (les "esclaves").

Cette architecture est complexe, car le maitre doit connaitre *a priori* tous les esclaves, donc toutes les lames, et la manière de les contrôler. Le bus maitre-esclave interdit l'échange de données entre lames, celles-ci ne se connaissant pas entre elles (du point de vue de la gestion du châssis, bien entendu, qui est un aspect indépendant de celui de la mise en réseau des lames).

Dans la configuration de l'invention, le bus de communication servant à la gestion du châssis (typiquement, le bus IPMB) est physiquement conservé, mais les lames l'utilisent avec un protocole non standard, de type *multimaster*, c'est-à-dire autorisant une communication où n'importe quel élément connecté sur le bus peut émettre des informations quand il le souhaite.

Essentiellement, chaque élément du châssis diffuse sur le bus des informations sur son identité, ses capacités et son état, et chaque élément du châssis recevant ces informations adapte ses processus pour répondre aux besoins de gestion et de contrôle du châssis.

De cette manière, le châssis, pris dans son ensemble, se gère lui-même en fonction des informations que chaque élément met à la disposition de tous les autres. Une intervention manuelle extérieure reste cependant toujours possible, en prenant le pas sur le processus d'autogestion quand cette intervention est appliquée à un élément particulier du châssis.

Plus précisément, l'invention propose un équipement de réseau du type châssis modulaire, d'un type général connu tel que divulgué par l'article précité de Liu et correspondant au préambule de la revendication 1.

La partie caractérisante de la revendication 1 expose les éléments spécifiques à l'invention. les sous-revendications visent des formes de mise en oeuvre particulières avantageuses.

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue schématique, de dessus, d'un châssis intégrant une série de lames montées sur une carte de fond de panier, ainsi que ses blocs d'alimentation et de ventilation.
Les Figures 2a et 2b illustrent les deux architectures conventionnelles de gestion du châssis à partir, respectivement, de lames réseau et de cartes *shelf manager.*
La Figure 3 illustre l'architecture particulière de gestion du châssis selon l'invention.
La Figure 4 illustre plus précisément les différents blocs fonctionnels d'une lame d'un châssis tel que celui illustré Figure 3.

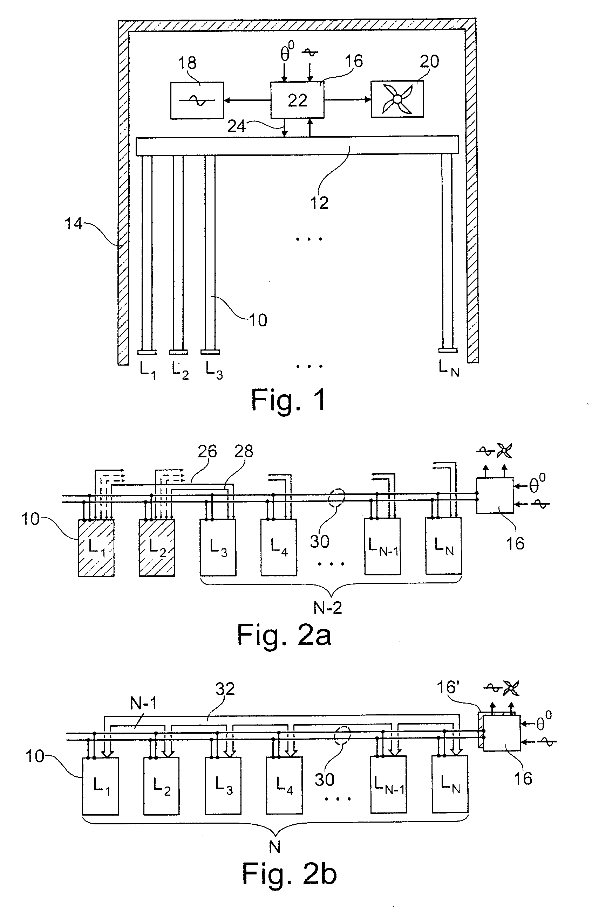

La Figure 1 représente schématiquement en vue de dessus la configuration d'un châssis, typiquement un châssis de type ATCA, comprenant une série de lames 10 enfichées chacune dans un emplacement ou *slot* correspondant d'une carte de fond de panier 12. La spécification ATCA prévoit ainsi de juxtaposer N = 14 ou N = 16 lames, désignées L₁, L₂, L₃ ... L_{N} sur les figures, sur une même carte de fond de panier 12 elle-même placée dans un châssis 14 d'une baie informatique.

Le châssis comporte également une carte 16 de pilotage des fonctions de bas niveau du bloc d'alimentation 18 et du bloc de ventilation 20. Cette carte reçoit des signaux d'entrée 22 issus de divers capteurs ou détecteurs, notamment des capteurs de température placés en divers points du châssis, ainsi que des signaux indiquant l'état de fonctionnement du bloc d'alimentation 18, en particulier pour signaler une coupure de l'alimentation secteur avec basculement sur un onduleur alimenté par batterie.

La carte 16 communique en 24 avec la carte de fond de panier 12 via un bus de type IPMB conformément à la spécification ATCA, ce bus étant également couplé à chacune des lames. Le bus IPMB reçoit ainsi en entrée des informations relatives à des données d'état ou à des paramètres électriques ou physiques mesurés ou détectés sur les diverses lames 10 ou sur le châssis via la carte 16, et délivre en sortie des commandes de gestion à destination d'une ou plusieurs de ces mêmes lames ou des blocs d'alimentation et de ventilation 18, 24 via la carte 16.

La Figure 2a illustre une première topologie conventionnelle, dans laquelle deux lames L₁ et L₂ sont des "lames réseau" dédiées à l'interconnexion des N-2 autres lames L₃, L₄ ... L_{N}, qui sont des "lames productives". La topologie est une topologie *dual star* en double étoile, avec une liaison réseau 26, 28 de chacune des lames réseau L₁ ou L₂ vers toutes les N-2 autres lames L₃ à L_{N}. Le routage est identique pour les lames réseau L₁ et L₂, celles-ci n'étant au nombre de deux que par redondance, pour des raisons de sécurité et de continuité de service même en cas de défaillance de l'une d'entre elles. D'autre part, toutes les lames, réseau ou productives, sont connectées à un bus série 30, qui est le bus IPMB servant à la gestion du châssis, la carte de pilotage général 16 étant également reliée à ce bus.

Avec cette architecture, les diverses informations de lames et de châssis nécessaires aux fonctions de gestion du châssis sont transmises par le bus 30 - qui est un bus maitre-esclave - vers le *shelf manager* qui se trouve sur les lames réseau L₁ et L₂. Celui-ci reçoit ces informations et dédécide des actions à entreprendre.

La Figure 2b illustre une autre architecture conventionnelle prévue par la spécification ATCA, à savoir une architecture de type *full mesh*. Cette architecture ne met en oeuvre aucune lame réseau, ce qui permet d'occuper entièrement le châssis avec des lames productives L₁ ... L_{N}, par exemple seize lames productives pour une occupation maximale du châssis. Pour l'interconnexion réseau entre lames, la carte de fond de panier est configurée avec un routage à liaisons multiples 32 comprenant N-1 canaux réseau permettant à chacune des N lames 10 d'être connectée directement (et non plus via une lame réseau comme dans la topologie *dual star)* à chacune des N-1 autres lames du châssis.

Avec une telle architecture ne mettant pas en oeuvre de lames réseau, les informations de lames et de châssis et les commandes de gestion nécessaires à la gestion du châssis transitent via la carte 16 (concrètement, deux cartes identiques 16, 16' pour des raisons de sécurité par redondance), qui en l'espèce est une carte *shelf manager* spécifique reliée au bus IPMB 30. Cette carte *shelf manager* est conçue pour assurer, en ce qui concerne le routage des données de gestion du châssis, le rôle que jouaient les lames réseau L₁ et L₂ dans l'architecture de la Figure 2a, toujours selon une configuration de type maitre/esclave (le maitre étant la lame réseau dans l'architecture de la Figure 2a, et la carte *shelf manager* dans celle de la Figure 2b).

La gestion du châssis est administrée de la même manière, avec collecte des informations de lames et de châssis par la carte *shelf manager* 16, et production et diffusion des commandes de gestion à partir de cette même carte 16.

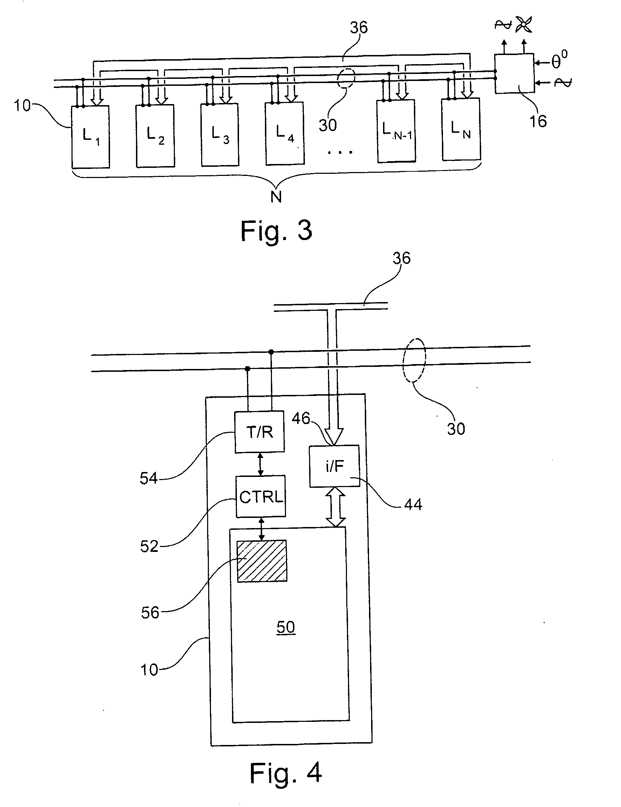

La Figure 3 illustre une architecture de châssis selon l'invention, où toutes les lames 10 sont des lames productives.

Les différentes lames 10 sont interconnectées par une liaison réseau 36, ainsi que par le bus CAN réutilisant le circuit du bus IPMB 30 pour les fonctions de gestion du châssis, bus qui est physiquement conservé tel quel et n'est à cet égard pas modifié (du point de vue de ses caractéristiques matérielles) pour la mise en oeuvre de l'invention.

De façon caractéristique de l'invention, le bus 30 est utilisé avec un protocole non prévu par la spécification ATCA.

Ce protocole est avantageusement le protocole CAN (*Controller Area Network*) qui est un protocole série très répandu dans beaucoup d'industries, notamment dans le domaine de l'automobile, et qui fait l'objet d'une normalisation précise. Ce type de protocole rend possible un management non hiérarchique de type point-à-point (*peer-to-peer*) en permettant une communication non hiérarchisée de type "multimaitre", où n'importe quel élément connecté sur le bus peut émettre des informations quand il le souhaite. Le bus 30 est ainsi utilisé en tant que bus de données série bidirectionnel permettant à n'importe quel élément qui y est connecté d'émettre des informations et, en même temps, d'interroger ce bus pour savoir s'il est en train de diffuser des informations qui lui sont destinées. En d'autres termes, tous les éléments connectés au bus - dans le cas présent, toutes les lames 10 ainsi que la carte 16 reliée au bloc d'alimentation et de ventilation - sont sur un pied d'égalité aussi bien en matière d'émission que de réception.

La Figure 4 illustre plus précisément les divers blocs fonctionnels d'une lame 10 de la configuration de châssis telle qu'illustrée Figure 3, permettant la mise en ouvre de l'invention.

Pour l'interconnexion avec les autres lames, un bloc 44 assure l'interfaçage avec la liaison réseau 36 via un port réseau 46. En ce qui concerne les fonctions de gestion du châssis, le processeur 50 assurant les fonctions productives de la lame 10 est relié au bus CAN réutilisant le circuit du bus IPMB 30 via un contrôleur CAN 52 et une interface de ligne CAN 54 (composants en eux-mêmes très simples et bon marché) pour assurer l'échange de données entre le bus CAN réutilisant le circuit du bus IPMB 30 et un module logiciel 56, identique sur toutes les lames - donc avec garantie de redondance des diverses fonctions de gestion du châssis, même en cas de défaillance ou de retrait de l'une des lames.

## Revendications

1. Un équipement de réseau, du type châssis modulaire comportant :
- une pluralité de lames amovibles (10), chaque lame comprenant des moyens aptes à délivrer des informations de lame relatives à des données d'état ou à des paramètres électriques ou physiques mesurés ou détectés sur la lame ;
- une carte de fond de panier (12) recevant les lames et comportant un routage de liaisons réseau (36) apte à coupler entre elles les lames,
- des blocs d'alimentation (18) et de ventilation (20) ;
- une carte de pilotage général (16), apte à :
· contrôler les blocs d'alimentation et de ventilation, et
· délivrer des informations de châssis relatives à des données d'état ou à des paramètres électriques ou physiques mesurés ou détectés sur le châssis ;
- un bus série (30), configuré sur la carte de fond de panier et couplé à chacune des lames, ce bus étant un bus dédié à la réception et à la diffusion desdites informations de lame et informations de châssis ; et
- des moyens de gestion de châssis, aptes à :
· recueillir sur le bus lesdites informations de lame et informations de châssis, et
· produire des commandes de gestion à destination d'une ou plusieurs desdites lames et/ou de la carte de pilotage général,
**caractérisé en ce que** :
- les lames montées sur la carte de fond de panier sont toutes des lames productives de type lame serveur ;
- le châssis est dépourvu de lame(s) dédiée(s) à l'interconnexion des liaisons réseau entre les autres lames de l'équipement ; et
- lesdits moyens de gestion de châssis sont répartis sur les N lames selon une configuration point-à-point non hiérarchisée, chacune des N lames comprenant des moyens (52-56) aptes à :
· analyser lesdites informations de lame et/ou informations de châssis recueillies sur le bus, et
· en fonction de cette analyse, générer le cas échéant au moins une desdites commandes de gestion et l'appliquer au bus (30) pour diffusion vers une ou plusieurs des autres lames et/ou vers la carte de pilotage général.

2. L'équipement de la revendication 1, dans lequel les caractéristiques matérielles des lames et de la carte de fond de panier sont conformes à la spécification ATCA, les caractéristiques matérielles du bus étant celles d'un bus de type IPMB.

3. L'équipement de la revendication 1, dans lequel la transmission sur le bus des informations de lame, des informations de châssis et des commandes de gestion est opérée selon un protocole conforme à la spécification CAN.

## Patentansprüche

1. Netzwerkausrüstung von der Art modulare Grundplatte, die aufweist:
- eine Vielzahl von entfernbaren Blades (10), wobei jedes Blade Einrichtungen enthält, die Blade-Informationen bezüglich von Zustandsdaten oder elektrischen oder physikalischen Parametern liefern können, die auf dem Blade gemessen oder erfasst werden;
- eine Hauptplatinenkarte (12), die die Blades aufnimmt und eine Leitweglenkung von Netzwerkverbindungen (36) aufweist, die die Blades miteinander verbinden kann,
- Versorgungs- (18) und Lüftungsblöcke (20);
- eine allgemeine Steuerkarte (16), die:
. die Versorgungs- und Lüftungsblöcke kontrollieren kann, und
. Grundplatten-Informationen bezüglich von Zustandsdaten oder von elektrischen oder physikalischen Parametern liefern kann, die auf der Grundplatte gemessen oder erfasst werden;
- einen seriellen Bus (30), der auf der Hauptplatinenkarte konfiguriert und mit jedem der Blades gekoppelt ist, wobei dieser Bus ein Bus ist, der für den Empfang und die Verbreitung der Blade-Informationen und Grundplatten-Informationen bestimmt ist; und
- Grundplatten-Verwaltungseinrichtungen, die:
. auf dem Bus die Blade-Informationen und Grundplatten-Informationen sammeln können, und
. für eines oder mehrere der Blades und/oder die allgemeine Steuerkarte bestimmte Verwaltungsbefehle erzeugen können,
**dadurch gekennzeichnet, dass**:
- die auf die Hauptplatinenkarte montierten Blades alle produktive Blades von der Art Server-Blade sind;
- die Grundplatte keine Blades(s) enthält, die für die Zusammenschaltung der Netzwerkverbindungen zwischen den anderen Blades der Ausrüstung bestimmt sind; und
- die Grundplatten-Verwaltungseinrichtungen auf den N Blades gemäß einer nicht-hierarchischen Punkt-zu-Punkt-Konfiguration verteilt sind, wobei jedes der N Blades Einrichtungen (52-56) enthält, die:
. die auf dem Bus gesammelten Blade-Informationen und/oder Grundplatten-Informationen analysieren können, und
. abhängig von dieser Analyse ggf. mindestens einen der Verwaltungsbefehle generieren und an den Bus (30) zur Verteilung an eines oder mehrere der anderen Blades und/oder die allgemeine Steuerkarte anwenden können.

2. Ausrüstung nach Anspruch 1, wobei die Hardware-Eigenschaften der Blades und der Hauptplatinenkarte der Spezifikation ATCA entsprechen, während die Hardware-Eigenschaften des Busses diejenigen eines Busses vom Typ IPMB sind.

3. Ausrüstung nach Anspruch 1, wobei die Übertragung der Blade-Informationen, der Grundplatten-Informationen und der Verwaltungsbefehle auf dem Bus gemäß einem Protokoll entsprechend der Spezifikation CAN durchgeführt wird.

## Claims

1. A network device, of the modular frame type, including:
- a plurality of removable blades (10), each blade comprising means adapted to deliver blade information relating to state data or to electrical or physical parameters measured or detected on the blade;
- a motherboard (12) receiving the blades and including a network ling routing (36) adapted to couple the blades to each other;
- power supply (18) and ventilation (20) blocks;
- a general control board (16), adapted to:
· control the power supply and ventilation blocks, and
· deliver frame information relating to state data or electric or physical parameters measured or detected on the frame;
- a serial bus (30), configured on the motherboard and coupled to each of the blades, this bus being a bus dedicated to the reception and diffusion of said blade information and frame information; and
- frame management means, adapted to:
· collect on the bus said blade information and frame information, and
· produce management commands for one or several of said blades and/or for the general control board;
**characterized in that**:
- the blades mounted on the motherboard are all productive blades of the server blade type;
- the frame is devoid of blade(s) dedicated to the interconnection of the network links between the other blades of the device; and
- said frame management means are distributed over the N blades according to a non-hierarchized point-to-point configuration, each of the N blades comprising means (52-56) adapted to:
· analyse said blade information and/or frame information collected on the bus, and
· based on this analysis, generate, if need be, at least one of said management commands and to apply it to the bus (30) for diffusion to one or several of the other blades and/or to the general control board.

2. The device of claim 1, wherein the physical characteristics of the blades and of the motherboard are compliant with the ATCA specification, the hardware characteristics of the bus being those of an IPMP-type bus.

3. The device of claim 1, wherein the transmission on the bus of the blade information, the frame information and the management commands is operated according to a protocol compliant with the CAN specification.
